(19)

Europäisches
Patentamt
European
Patent Office
Office européen
des brevets

(11) **EP 2 793 145 A2**

(12) **EUROPEAN PATENT APPLICATION**

(43) Date of publication:
**22.10.2014 Bulletin 2014/43**

(51) Int Cl.:
***G06F 17/30*** *(2006.01)*

(21) Application number: **13193128.9**

(22) Date of filing: **15.11.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **19.04.2013 EP 13164483**

(71) Applicant: **Siemens Aktiengesellschaft
80333 München (DE)**

(72) Inventor: **Waltinger, Ulli
81739 München (DE)**

(54) **Computer device for minimizing computer resources for database accesses**

(57)      A computer device (1) for minimizing computer resources for database accesses by structuring a content of received unstructured input data is provided. The computer device (1) comprises a recognition module (11) for determining entities within the content of the unstructured input data (10) for providing a set of determined entities (12), a disambiguation module (13) for determining a unique identifier for each entity of the set of determined entities based on a context-based evaluation of the set of determined entities using a primary database (14) and for allocating to each entity of the set of determined entities one of the determined unique identifiers, and a provision module (15) for providing the set of entities and the allocated unique identifiers as a set (16) of structured content of the received input data (10) so that computer resources needed for further database accesses are minimized.

Using such a computer device, structured content of originally unstructured data can be obtained. This minimizes the required computer resources when carrying out further database accesses.

Further, a corresponding method and a computer program product comprising program code for executing such a method are provided.

FIG 1

EP 2 793 145 A2

**EP 2 793 145 A2**

**Description**

The present invention relates to a computer device for minimizing computer resources for database accesses by structuring a content of received input data, a corresponding method for minimizing computer resources for database accesses, and a computer program product comprising a program code for executing such a method.

In present systems, in particular enterprise systems, a huge amount of input data, for example containing information in view of locations, products, and so on, might need to be provided in a searchable form. However, often the input data is not in a searchable form but may require some prior processing.

As the input data may originate from various heterogeneous sources, the input data typically is unstructured, i.e. does not contain information in an easily digitally searchable form. Thus, the unstructured input data typically lack of metadata or the information content lacks of any computer processable semantic.

Common techniques for analyzing information hidden in unstructured machine-readable documents are Named Entity Recognition (NER) and Disambiguation (NERD). Based on these techniques, information contained in unstructured data may be recognized and disambiguated, which may be necessary as some information may have multiple meaning. However, these techniques require many databases in order to provide recognized and disambiguated information. Access to many databases however requires a lot of computer resources and causes high computational costs.

It is one object of the present invention to provide an improved computer device needing reduced computer resources for database accesses.

Accordingly, a computer device for minimizing computer resources for database accesses by structuring a content of received unstructured input data is provided. The computer device comprises a recognition module for determining entities within the content of the unstructured input data for providing a set of determined entities, a disambiguation module for determining a unique identifier for each entity of the set of determined entities based on a context-based evaluation of the set of determined entities using a primary database and for allocating to each entity of the set of determined entities one of the determined unique identifiers, and a provision module for providing the set of entities and the allocated unique identifiers as a set of structured content of the received input data so that computer resources needed for further database accesses are minimized.

The provided computer device is based on the idea to minimize required computer resources by structuring the content of unstructured data. In addition, one primary database is required to disambiguate determined entities wherein the same primary database can also be used for determining additional information in view of these entities. In common systems, one database might be required for disambiguation and another database might be required for obtaining additional information in view of the entities. Further, as the computer device structures the content of the unstructured data, the access time to information within the content can also be improved and thus the computational costs and computer resources can be reduced.

The computer device may receive any kind of unstructured input data like documents, web pages, e-mail correspondence or the like. The unstructured input data comprises information content, for example text. The content also comprises entities. Entity in this context may refer to any kind of information contained in the content of the unstructured data. Entities may be for example specific text parts, like locations, products, characteristics, enterprises and the like.

The computer device may establish a mechanism for an effective information resolution of ambiguous information units, i.e. unstructured input data, into specific and semantically augmented information, i.e. set of structured content. This may be achieved in the context of entity identification and disambiguation by means of a linked data-driven resolution architecture that comprises formalized concept and instance categories as well as related formalized background knowledge. That is, the recognition module is able to recognize specific information segments within a document collection, and the disambiguation module is able to interconnect the respective information segments, i.e. determined entities, to its semantic metadata representation, i.e. to unique identifiers, by automatic means while at the same time relying on linked data only. The primary database may be a database comprising linked information. Linked means that the information contained in the database is linked to further information. Thus, the primary database comprises interlinked information.

In contrast to common systems, the computer device described herein only uses a primary database without the requirement of any training cycle for graph construction or edge weighting in order to process the primary database but can operate directly on the information being contained in the primary database.

According to an embodiment, the recognition module is adapted to determine the entities using an entity recognition algorithm for comparing the content of the unstructured input data with a dictionary database.

The entity recognition algorithm may recognize entities within the unstructured input data being also part of the dictionary database. Alternatively, the recognition module may be adapted to use a trained model, which is able to recognize entities.

According to a further embodiment, the determined entities correspond to named entities.

Named entities may refer to a specific kind of information within the unstructured data. Named entities may be for instance objects having a name. For instance, documents, articles or other resources may contain named entities like locations, products or people. Named Entity Recognition (NER) as provided herein refers to the identification of entities as proper nouns, which may be further classified into a predefined set of entity categories, for example location, persons, numeric or time.

According to a further embodiment, the disambiguation module includes a retrieval unit for retrieving a number of candidates of unique identifiers for each entity of the set of determined entities, wherein each candidate consists of a named entity and a unique identifier.

The primary database may comprise a plurality of entities with a corresponding unique identifier. The unique identifier may be a uniform resource identifier (URI) being a string of characters used to identify a name of a web resource. The URI is a unique identifier so that the entity may be unambiguously identified. However, as the determined entities are not unambiguous, the disambiguation module is adapted to determine to which URI the determined entity refers by retrieving a number of possible candidates of URIs and then allocating the correct URI to the determined entity. This may be repeated for each entity of the determined entities.

The retrieval unit retrieves all possible candidates. However, in order to reduce the computational effort, only a predefined number of candidates will be further evaluated.

According to a further embodiment, the retrieval unit is adapted to search the primary database for the number of candidates using prior knowledge of a category of the entity being obtained by the recognition unit.

In order to reduce time and effort, i.e. the costs, for searching the primary database, prior knowledge of categories of the entities may be used. For example, during the determination of the entities by the recognition module, categories of the entities may be determined. Categories may refer for example to the kind of entity, like location, person, and the like. When taking into account the category, search queries for the primary database may be restricted to specific parts of the primary database. Thus, the amount of data to be searched can be reduced.

Thus, the retrieval unit utilizes the primary database not only to retrieve a list of candidates, but also uses the ontology of the database to typify and validate the search strategy. That is that a mapping between the entity category (e.g. LOC for location) and the respective primary database entity counterparts is provided. A possible category definition may be:

LOC > PopulatedPlace; Geography; CelestialBody;
NaturalPlace;...

The number of candidates to be further evaluated may be defined by using a score:

$$\text{score}_{\text{can}}(q, \ d) = \log_{10} \sum_{t \in q} (\text{tf}(t \in d) \cdot \text{idf}(t)^2 \cdot t_b \cdot \text{norm}(t,d)))$$

In the following, it is assumed that the primary database comprises an abstract description, in which the search is performed. tf ($t \in d$) defines the term frequency within the observed scored description d of the primary database. Idf(t) represents the inverse document frequency applied to the summary description representation of the primary database. tb is the search time boost of term t in the query q. norm(t,d) is a normalizing factor.

According to a further embodiment, the disambiguation module includes a ranking unit for determining a ranking of the number of candidates.

In order to determine which candidate has the highest probability to refer to the determined entity, a ranking of the number of candidates may be performed. Such a ranking may define the candidate with the highest probability until the candidate with the lowest probability.

According to a further embodiment, the ranking unit is adapted to select the candidate having the highest ranking value as the candidate to be allocated to the respective entity.

Based on the ranking, the candidate with the highest probability of referring to the determined entity is allocated to the respective entity. The candidate may be chosen for instance based on a predefined threshold. The threshold may be predefined such that only one candidate is above this predefined threshold.

According to a further embodiment, the ranking unit is adapted to sort the number of candidates based on a backlink evaluation.

This ranking or scoring may also be called popularity-based ranking. Candidates are determined as having the most backlinks when many other sources of the primary database comprise a link to these candidates. Thus, the backlink evaluation comprises a determination of interlinks within the primary database.

The score of the backlink may be

$$evi_{pop}(u) = n \cdot log_{10}(log_{10}(b_u))$$

where $b_u$ refers to the number of incoming links to a certain entity of the primary datbase. A double logarithmic normalized backlink score is used as an (probability-based) evidence for the most popular referenced entity.

According to a further embodiment, the ranking unit is adapted to sort the number of candidates based on a comparison of a form of each candidate and the respective entity.

Form in this context may refer to specific characteristics of the candidates and entities. For example, when the entities and candidates are in text form, the terms of the entities and candidates are compared. The higher the overlap between the terms, the higher the ranking value will be. For instance, when the entity is "New York", the candidate "New York" referring to the state will have a higher ranking than the candidate "New York City".

This ranking or scoring may also be called surface-based evidence ranking. The surface-based evidence refers to a quotient between the intersection and the union of the pair wise compared term features among the entity, e, and the current observed candidate:

$$evi_{sur}(e,u) = \frac{tf_{e,u}}{tf_{e,u} + tf_e + tf_u}$$

According to a further embodiment, the ranking unit is adapted to sort the number of candidates based on a comparison of a context of each candidate and the respective entity. The context-based score collects evidence from the description of each primary database entity. The idea of this ranking or scoring is that each entity is primarily instantiated through its context. The context is defined as the terms or entities surrounding the entity within a word window of size m.

$$evi_{con}(c,u) = \frac{\sum_{i=1}^{n} c_i \times u_i}{\sqrt{\sum_{i=1}^{n}(c_i)^2} \times \sqrt{\sum_{i=1}^{n}(u_i)^2}}$$

A standard cosine measure may be used to obtain the similarity between the context of the input entity (c) using m word features left and right from the observed token or candidate by means of its sentence representation, and the context of the entity c as given by its short summary value (u). It should be noted that a normalized term frequency is used for input vector construction utilizing nouns and entities only.

According to a further embodiment, the ranking unit is adapted to sort the number of candidates based on a comparison of a category of each candidate and a category of the respective entity being obtained by the recognition unit.

This ranking is also called topic-based ranking. The topic-based evidence measures the correlation from the input entity category and the respective primary database category associated to the candidate. The primary database may be based on a graph-based representation. A normalized graph-path distance may be used for ranking, when comparing the distance (dis) of the input entity category uc and the candidate category nc by

$$evi_{top}(uc,nc) = 1/|dis(uc,nc)|$$

According to a further embodiment, the ranking unit is adapted to accumulate a plurality of rankings being obtained by different sorting algorithms.

In this embodiment, the different rankings (k) performed by the ranking unit may be accumulated to improve the ranking. Based on the above equations, the evidence confidence, i.e., the accumulation of the rankings may be performed by:

$$\text{conf}_{evi}(d) = \frac{\text{score}_{can} + \sum_{i=1}^{k}(\lambda \cdot \text{evi}_i) + \phi}{k+2}$$

$$d_{max} = \underset{d \in D}{\text{argmax}}\ \text{conf}_{evi}(d)$$

where sigma represents an redirect amplifier as an indicator whether an respective redirect instance was used for the calculation (for instance an entry NYC may be redirected to an entry New York City within the primary database). Lamda is defined as a weighting parameter. In a final step, all entity candidates, $d \in D$ may be ranked by its $\text{conf}_{evi}$ score, and the final entity instance, i.e. the candidate to be chosen as the input entity, may be selected by means of dmax being higher than a threshold, as described above. That means only those entities with a sufficient mutual evidence confidence are selectable as the input entity.

According to a further embodiment, the computer device further comprises a searching module for searching for additional information with respect to one of the set of entities within a secondary database using the allocated unique identifier.

Based on the information which is linked with the selected candidate entity, i.e. the unique identifier, of the primary database, further information may be gathered from additional secondary databases. Within these databases, the information are also linked with the unique identifier. Thus, the required computer resources as well as the computational costs for retrieving this additional information are reduced as the search query for the secondary databases are reduced to the unique identifier. In addition, the kind or type of searched information may be indicated to further reduce the searching time.

According to a further aspect, a method for minimizing computer resources for database accesses by structuring a content of received unstructured input data is provided. The method comprises determining entities within the content of the un-structured input data for providing a set of determined entities, determining a unique identifier for each entity of the set of determined entities based on a context-based evaluation of the determined entities using a primary database, allocating to each entity of the set of determined entities one of the determined unique identifiers, and providing the set of entities and the allocated unique identifiers as a set of structured content of the received input data so that computer resources needed for further database accesses are minimized.

According to a further aspect, the invention relates to a computer program product comprising a program code for executing the above-described method for minimizing computer resources needed for database accesses by structuring a content of received unstructured input data when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

The embodiments and features described with reference to the computer device of the present invention apply mutatis mutandis to the method of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:

Fig. 1 shows a first example of a representation of a computer device for minimizing computer resources for database accesses;

Fig. 2 shows a second example of a representation of a computer device for minimizing computer resources for database accesses;

Fig. 3 shows an example of a representation of an overall system comprising a computer device for minimizing computer resources for database accesses;

Fig. 4 shows a third example of a representation of a computer device for minimizing computer resources for database accesses; and

Fig. 5 shows an embodiment of a sequence of method steps for minimizing computer resources for database accesses.

In the Figures, like reference numerals designate like or functionally equivalent elements, unless otherwise indicated.

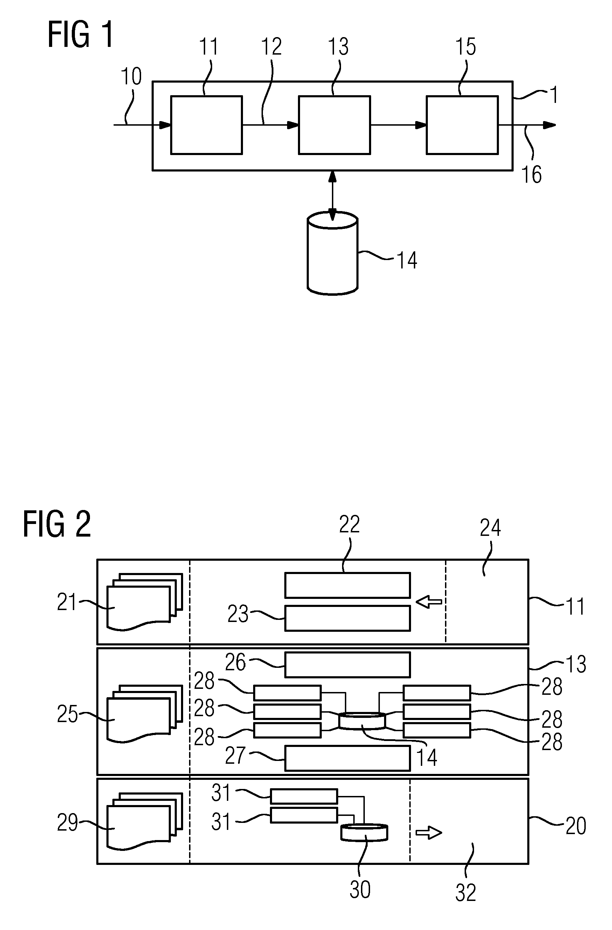

Fig. 1 shows a computer device 1 for minimizing computer resources for database accesses by structuring a content of received unstructured input data 10.

The computer device 1 receives unstructured input data 10. The unstructured input data 10 may be any kind of data comprising recognizable entities, for example documents, text documents, e-mails or web pages. A recognition module 11 of the computer device determines entities within the content of the unstructured input data 10 and provides a set of determined entities 12 to a disambiguation module 13.

The disambiguation module 13 determines a unique identifier for each entity of the set 12 of determined entities. For this purpose, the disambiguation module 13 performs a context-based evaluation of the set 12 of determined entities using a primary database 14. Subsequently, the disambiguation module 13 allocates to each entity of the set 12 of determined entities one of the determined unique identifiers.

A provision module 15 of the computer device 1 provides the set of entities and the allocated unique identifiers as a set 16 of structured content of the received input data 10. This set 16 of structured content can be used for further database accesses, in particular to secondary databases 30 as described below.

Fig. 2 shows a second example of a computer device 1, which determines geographic entities.

The recognition module 11 comprises a geographic database 21. A recognition algorithm 22 determines possible entities, and a validation algorithm 23 determines, based on the geographic database 21, the validation of these possible entities. The recognition algorithm 22 and the validation algorithm 23 can receive a query 24 in order to search for specific entities.

The disambiguation module 13 comprises a mapping unit 25. The mapping unit 25 is adapted to map the entities validated in the recognition module 11 to unique identifiers. The disambiguation module 13 comprises a retrieval unit 26 for retrieving possible candidates 28 from the primary database 14 and a ranking unit 27 for ranking these candidates 28.

The computer device 1 further comprises a searching module 20. This searching module 20 can be used for carrying out further database accesses and queries. For this purpose, an algorithm 29 is used, which performs the access to a secondary database 30. As a result, geographic search results 31, when the secondary database 30 is a geospatial database, are outputted. These search results 31 can be shown together with the entity as a search result 32.

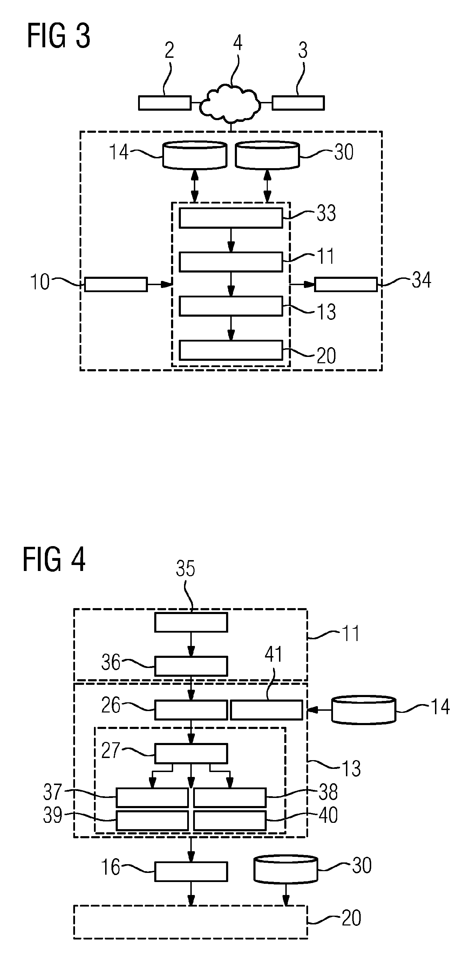

An overall system is shown in Fig. 3. Here, a user device 2 communicates via a network 4 with a data center server 3. The user device 2 can use the computer device 1 via the network 4.

The computer device 1 in this case comprises a data preprocessing module 33. Such a module can be used for preparing the input data 10 to be easier processed by the recognition module 11. The computer device 1 outputs data 34 comprising information from the primary database 14 and the secondary database 30. These output information 34 can be received by the user device 2 or the data center server 3.

Another example of the computer device 1 is shown in Fig. 4.

According to this embodiment, the recognition module 11 comprises a input representation unit 35, which is adapted to receive the input data 10 and to provide a representation, for instance as graph, of the input data 10. A candidate identification unit 36 identifies possible candidates. The candidate identification unit 36 can comprise the recognition algorithm 22 and the validation algorithm 23 of Fig. 2.

The disambiguation module 13 comprises, in addition to the disambiguation modules 13 as shown in Figs. 1 to 3, a filter generation unit 41. The filter generation unit 41 can be used to provide a selection of candidates based on definable criteria.

Further, the ranking unit 27 provides a popularity-based ranking 37, a surface-based ranking 38, a context-based ranking 39 and a topic-based ranking 40. The ranking unit 27 thus provides an accumulated ranking based on all four ranking algorithms.

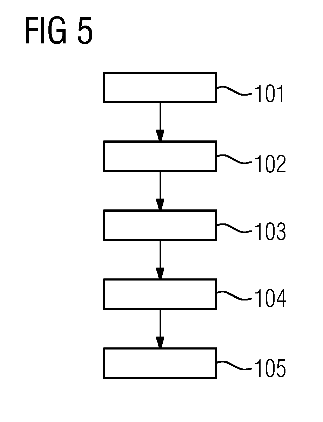

Fig. 5 shows a method for minimizing computer resources for database accesses by structuring a content of received unstructured input data 10. The method comprises in a first step 101 determining entities within the content of the unstructured input data 10. A set of determined entities is provided, 102.

In a further step 103, a unique identifier is determined for each entity of the set of determined entities based on a context-based evaluation of the determined entities using a primary database 14. Subsequently, one of the determined unique identifiers is allocated 104 to each entity of the set of determined entities.

Finally, the set of entities and the allocated unique identifiers are provided 105 as a set 16 of structured content of the received input data 10 so that computer resources needed for further database accesses are minimized.

Although the present invention has been described in accordance with preferred embodiments, it is obvious for the person skilled in the art that modifications are possible in all embodiments.

**Claims**

1. A computer device (1) for minimizing computer resources for database accesses by structuring a content of received unstructured input data (10), comprising:

   a recognition module (11) for determining entities within the content of the unstructured input data (10) for providing a set of determined entities (12),
   a disambiguation module (13) for determining a unique identifier for each entity of the set of determined entities based on a context-based evaluation of the set of determined entities using a primary database (14) and for allocating to each entity of the set of determined entities one of the determined unique identifiers, and
   a provision module (15) for providing the set of entities and the allocated unique identifiers as a set (16) of structured content of the received input data (10) so that computer resources needed for further database accesses are minimized.

2. The computer device (1) according to claim 1,
   wherein the recognition module (11) is adapted to determine the entities using an entity recognition algorithm for comparing the content of the unstructured input data (10) with a dictionary database.

3. The computer device (1) according to claim 1 or 2,
   wherein the determined entities correspond to named entities.

4. The computer device (1) according to one of claims 1 - 3,
   wherein the disambiguation module (13) includes a retrieval unit (26) for retrieving a number of candidates of unique identifiers for each entity of the set of determined entities (12), wherein each candidate consists of a named entity and a unique identifier.

5. The computer device (1) according to claim 4,
   wherein the retrieval unit (26) is adapted to search the primary database (14) for the number of candidates using prior knowledge of a category of the entity being obtained by the recognition unit (11).

6. The computer device (1) according to claim 4 or 5,
   wherein the disambiguation module (13) includes a ranking unit (27) for determining a ranking of the number of candidates.

7. The computer device (1) according to claim 6,
   wherein the ranking unit (27) is adapted to select the candidate having the highest ranking value as the candidate to be allocated to the respective entity.

8. The computer device (1) according to claim 6 or 7,
   wherein the ranking unit (27) is adapted to sort the number of candidates based on a backlink evaluation.

9. The computer device (1) according to one of claims 6 - 8,
   wherein the ranking unit (27) is adapted to sort the number of candidates based on a comparison of a form of each candidate and the respective entity.

10. The computer device (1) according to one of claims 6 - 9,
    wherein the ranking unit (27) is adapted to sort the number of candidates based on a comparison of a context of each candidate and the respective entity.

11. The computer device (1) according to one of claims 6 - 10,
    wherein the ranking unit (27) is adapted to sort the number of candidates based on a comparison of a category of each candidate and a category of the respective entity being obtained by the recognition unit (11).

12. The computer device (1) according to one of claims 6 - 11,
    wherein the ranking unit (27) is adapted to accumulate a plurality of rankings being obtained by different sorting algorithms.

13. The computer device (1) according to one of claims 1 - 12,

further comprising
a searching module (20) for searching for additional information with respect to one of the set of entities within a secondary database (30) using the allocated unique identifier.

14. A method for minimizing computer resources for database accesses by structuring a content of received unstructured input data (10), comprising:

determining (101) entities within the content of the unstructured input data (10) for providing (102) a set of determined entities,
determining (103) a unique identifier for each entity of the set of determined entities based on a context-based evaluation of the determined entities using a primary database (14),
allocating (104) to each entity of the set of determined entities one of the determined unique identifiers, and
providing (105) the set of entities and the allocated unique identifiers as a set (16) of structured content of the received input data (10) so that computer resources needed for further database accesses are minimized.

15. A computer program product comprising a program code for executing a method for minimizing computer resources needed for database accesses by structuring a content of received unstructured input data (10) according to claim 14.

FIG 1

FIG 2

FIG 3

FIG 4

FIG 5